# FASCICULE DE BREVET EUROPEEN

(11) **EP 2 147 819 B1**
(45) Date de publication et mention de la délivrance du brevet: **23.05.2012**
(21) Numéro de dépôt: 09165216.4
(22) Date de dépôt: 10.07.2009
(51) Int. Cl.: B60N 2/30

(54) **Siège escamotable pour véhicule automobile**
Verstaubarer Sitz für einen Kraftfahrzeug
Retractable seat for an automotive vehicle

(30) Priorité: 24.07.2008 FR 0804219
(43) Date de publication de la demande: 27.01.2010
(73) Titulaire: GRUPO ANTOLIN-INGENIERIA, S.A., 09080 Burgos (ES); PEUGEOT CITROËN AUTOMOBILES S.A., 78140 Vélizy Villacoublay (FR)
(72) Inventeur: Dutot, Christophe, 94400, VITRY SUR SEINE (FR); Duchateau, Jean, 43330, PONT SALOMON (FR); Aumond, Jean Claude, 42600, MONTBRISON (FR)
(74) Mandataire: Delorme, Nicolas

(56) Documents cités:
- WO-A-2004/043730
- US-A- 4 805 953
- US-A- 5 527 087

## Description

La présente invention concerne un siège escamotable notamment pour un véhicule automobile.

De nombreux véhicules sont équipés de sièges escamotables ; ces sièges permettent d'adapter la configuration de l'habitacle aux besoins de l'utilisateur.

Ainsi, un véhicule de type monospace ou break peut embarquer jusqu'à sept ou huit passagers ou peut présenter un plancher plat qui permet alors de charger des objets volumineux.

On connaît par le document US-A-5527087 un siège qui s'escamote par un système de parallélogramme déformable conforme au préambule de la revendication 1.

On connaît également par le document US-A-4805953 un siège qui s'escamote en rabattant le dossier sur l'assise.

Pour assurer cette modularité, les sièges équipant ce type de véhicules peuvent présenter une armature permettant selon les besoins de se placer en configuration déployée dans laquelle un passager peut prendre place dans le siège ou en position escamotée dans laquelle le siège est replié dans une cuvette pratiquée dans le plancher du véhicule.

Un siège escamotable est donc complexe et doit obéir à des exigences parfois contradictoires.

Ainsi, un siège escamotable doit assurer un confort satisfaisant au passager notamment en possédant une assise suffisamment surélevée par rapport au plancher et en possédant un dossier qui, en position déployée, doit être suffisamment haut. Un siège escamotable doit, en outre, pouvoir s'insérer entièrement dans le plancher sans laisser subsister des saillies d'aucune nature. Enfin, un siège escamotable doit présenter un fonctionnement fiable exempt de coincements.

Or, compte tenu de ces nombreux points de pivot nécessaires pour permettre son escamotage, un siège escamotable peut présenter un comportement instable et peut, au cours de son fonctionnement, avoir des points durs et/ou des points de blocage.

Dans ce contexte technique, un but de la présente invention est de proposer un siège dont le rabattement peut se faire par une action en un unique point du siège sans risque de coincement de celui-ci.

L'invention concerne un siège escamotable notamment pour véhicule automobile comprenant :
- une assise sur laquelle est articulé un dossier par une liaison pivot,
- des moyens de liaison avant reliant de manière pivotante l'assise à la structure du véhicule,
- des moyens de liaison arrière reliant de manière pivotante le dossier à la structure du véhicule,
le siège pouvant occuper une position déployée dans laquelle l'assise est sensiblement horizontale et est soutenue par les moyens de liaison avant et dans laquelle le dossier est sensiblement vertical et est soutenu par les moyens de liaison arrière ou pouvant occuper une position escamotée dans laquelle le dossier est rabattu contre l'assise et les moyens de liaison avant et arrière sont repliés sensiblement à l'horizontale.

Le siège selon l'invention est caractérisé en ce qu'il comprend des moyens d'interconnexion des moyens de liaison arrière et des moyens de liaison avant, autres que le chassis d'assise, conçus pour transmettre un pivotement des moyens de liaison arrière en un pivotement de même sens des moyens de liaison avant.

Ainsi, l'invention fournit un siège dont les moyens de liaison avant et arrière sont interconnectés. L'ensemble des composants du siège qui sont sollicités au cours de l'escamotage - dossier, assise, moyens de liaison avant et arrière - sont liés ; contrairement aux sièges de l'art antérieur, le siège selon l'invention ne comporte pas de composant dont le mouvement est libre et peut être source de blocage. Le siège selon l'invention présente donc un comportement totalement fluide. Les moyens d'interconnexion n'ont, par ailleurs, pas d'impact défavorable sur la compacité du siège lorsqu'il est en position escamotée puisqu'ils permettent aux moyens de liaison avant et arrière de pivoter chacun dans un même sens ce qui permet à chacun de se rabattre sans empièter l'un sur l'autre.

Les caractéristiques complémentaires énumérées ci-après font l'objet des revendications dépendantes.

Selon une forme de réalisation préférée, les moyens d'interconnexion présentent au moins une biellette menante articulée par rapport à la structure du véhicule par une liaison pivot ; ladite biellette menante est entraînée en rotation par les moyens de liaison arrière.

Les moyens d'interconnexion comprennent, de plus, au moins une biellette menée articulée sur ladite biellette menante et articulée sur les moyens de liaison avant.

De façon concrète, les moyens de liaison avant peuvent comprendre un pied avant sur lequel est ménagée au moins une liaison pivot assurant la liaison de la bielle menée.

Il peut être prévu que le pied avant présente au moins une saillie sur laquelle est positionnée la liaison pivot assurant la liaison avec la bielle menée.

De façon concrète, les moyens de liaison arrière peuvent comprendre au moins une bielle arrière dont une extrémité est articulée sur le dossier par une liaison pivot et dont la seconde extrémité est articulée sur la structure du véhicule par une liaison pivot.

Pour assurer la transmission du mouvement de chaque bielle arrière vers le pied avant, il est envisagé que la bielle arrière présente une roue dentée centrée sur la liaison pivot qui la relie à la structure du véhicule et que la biellette menante présente une roue dentée qui s'engrène dans la roue dentée de la bielle arrière.

Pour limiter les jeux transversaux, il est prévu que le siège présente deux bielles arrière disposées de part et d'autre du dossier.

De façon à préserver un compromis entre compacité du siège en position escamotée et ergonomie du siège en position déployée, la liaison pivot qui assure l'articulation du dossier sur la bielle arrière est positionnée sensiblement au niveau du tiers inférieur du dossier.

De plus, la liaison pivot assurant l'articulation de chaque bielle arrière sur la structure du véhicule est située à une cote plus élevée dans une direction verticale Y du véhicule que la liaison pivot assurant l'articulation du pied avant sur la structure du véhicule. Cette disposition permet de tenir compte de la particularité du siège selon l'invention qui est la présence des roues dentées des bielles arrière et des bielles menantes correspondantes.

Pour sa bonne compréhension, l'invention est décrite en référence au dessin ci annexé représentant à titre d'exemple non limitatif, une forme de réalisation d'un siège selon celle-ci.
Figures 1 à 4 montrent en vue de côté une première forme de réalisation respectivement en position déployée puis dans deux positions intermédiaires, et enfin en position escamotée d'un siège selon l'invention schématisée ;
Figure 5 est une vue en perspective éclatée d'une forme de réalisation du siège selon l'invention.

Le dessin illustre schématiquement une forme de réalisation d'un siège selon l'invention. En d'autres termes, les éléments de garnissage et les éventuels éléments de capotage ont été omis pour faire apparaître clairement l'armature du siège selon l'invention et les avantages qui en découlent.

Par convention, la présente description est faite par rapport à un référentiel cartésien XYZ lié au véhicule dans lequel l'axe X est orienté dans la direction longitudinale du véhicule, l'axe Y est orienté dans la direction transversale du véhicule, l'axe Z est orienté dans la direction verticale du véhicule. Les termes notamment avant, arrière, haut, bas sont donnés par rapport à ce référentiel.

Il est précisé que le véhicule dans lequel le siège selon l'invention est destiné à être embarqué comprend une cuvette ménagée dans le plancher. Par cuvette, on entend une cavité de forme généralement parallélépipédique dans laquelle le siège vient s'escamoter.

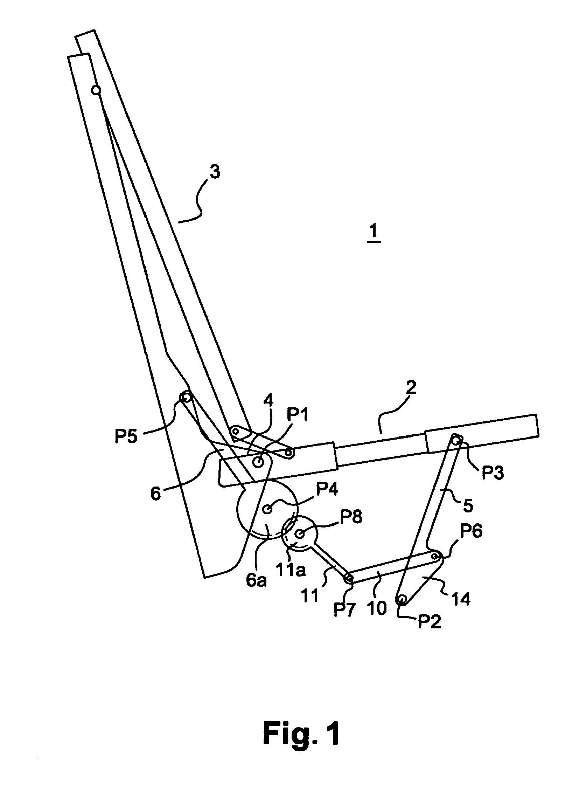

Tout d'abord, en se référant à la figure 1, il apparaît que le siège 1 possède une assise 2 et un dossier 3, qui sont reliés par une liaison pivot P1.

Le dossier 3 peut être doté de deux consoles 4 symétriques sur lesquelles le dossier 3 est articulé. La liaison pivot P1 peut être constituée d'axes supportés par l'assise qui sont engagés dans des perçages ménagés dans les consoles 4 du dossier 3.

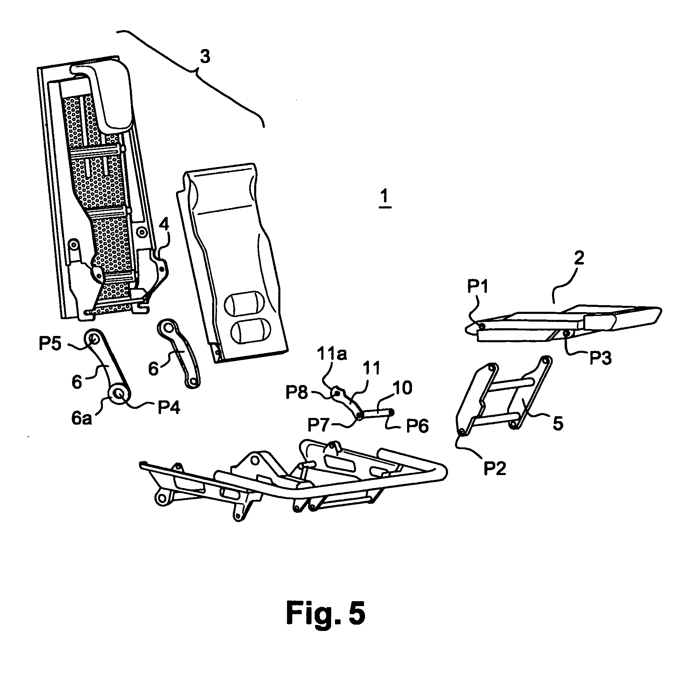

L'assise 2 est reliée à la structure du véhicule par un pied avant 5. De façon concrète, le pied avant 5 peut prendre la forme d'une échelle comme le montre la figure 5 ou peut être décomposé en deux bielles indépendantes qui viennent se positionner de part et d'autre de l'assise 2.

L'assise 2 est donc suspendue par le pied avant 5 ; le pied avant 5 est relié par une liaison pivot P2 à la structure du véhicule et par une liaison pivot P3 à l'assise elle-même.

En ce qui concerne la liaison du siège sur sa partie arrière, le siège est doté de deux bielles arrière 6 qui se placent de part et d'autre du dossier 3. Chaque bielle arrière 6 présente, à chacune de ses extrémités, deux liaisons pivots de type axe ou tourillon engagé dans un alésage. Une liaison pivot P4 assure la liaison de la bielle arrière 6 avec la structure du véhicule et une liaison pivot P5 assure la liaison de la bielle arrière 6 avec le dossier 3 du siège.

On peut noter que la liaison pivot P5 est positionnée sensiblement à hauteur du tiers inférieur du dossier 3.

De façon originale au siège selon l'invention, chacune des bielles arrière 6 est cinématiquement reliée au pied avant 5 par un et, de préférence, par des moyens d'interconnexion.

Ces moyens d'interconnexion sont constitués de deux biellettes à savoir une biellette menante 11 et une biellette menée 10.

Chaque biellette menée 10 possède deux liaisons pivots respectivement P6 et P7 qui permettent de relier la biellette menée 10 au pied avant 5 et à la biellette menante 11.

On peut noter que chaque biellette menée 10 est reliée au pied avant 5 par un point de liaison qui est lui-même situé en avant de l'axe passant par les liaisons P2 et P3. Pour cela, le pied avant 5 peut présenter une excroissance 14 qui déporte vers l'avant la liaison pivot P6.

En ce qui concerne les biellettes menante 11, celles-ci viennent se fixer sur les biellettes menée 10 au niveau de la liaison P7 et sont connectées aux bielles arrière 6 par un système de roues dentées.

En pratique, chaque biellette menante 11 est dotée d'une roue dentée 11a qui s'engrène dans une roue dentée 6a de la bielle arrière 6 qui est concentrique de la liaison pivot P4.

Il est précisé que la roue dentée 11a possède un alésage dans lequel peut être inséré un axe de rotation de façon à former une liaison pivot P8. La liaison pivot P8 permet d'articuler la biellette menante 11 par rapport à un point fixe de la structure du véhicule lors de la rotation de la bielle arrière 6.

On voit donc que le piètement du siège, c'est-à-dire la partie qui soutient l'assise et le dossier lorsque le siège est en position déployée, possède un pied avant et un pied arrière qui sont cinématiquement interdépendants.

La définition générale du siège peut prévoir de plus que le point d'attache de la liaison pivot P4 soit dans la direction verticale plus élevée que le point d'attache de la liaison pivot P2.

Le siège est, par ailleurs, équipé de moyens de verrouillage qui agissent sur une ou plusieurs des liaisons pivot P1 à P8 de façon à immobiliser le siège dans sa position déployée. Ces moyens de verrouillage peuvent prendre par exemple la forme de crochets qui s'engagent sur des doigts ou pions. Le siège peut comporter une sangle accessible par exemple au niveau du dossier qui permet de désactiver les moyens de déverrouillage. Les moyens de verrouillage ne sont pas représentés sur le dessin.

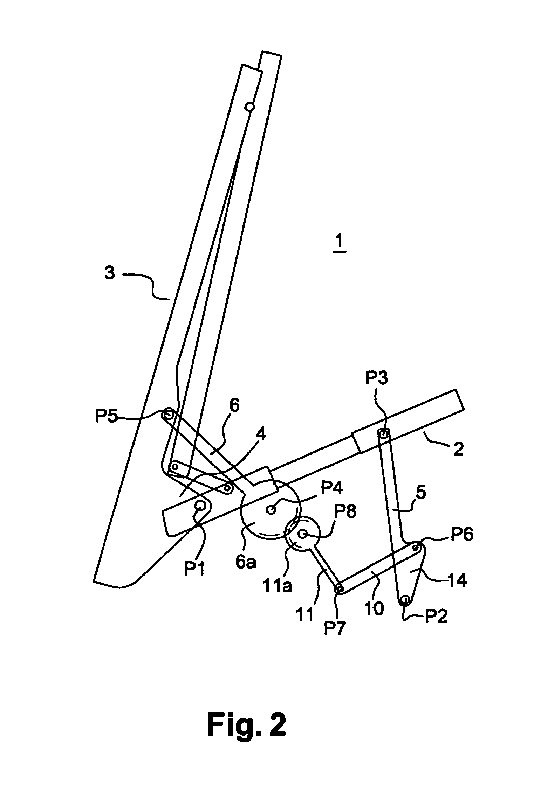

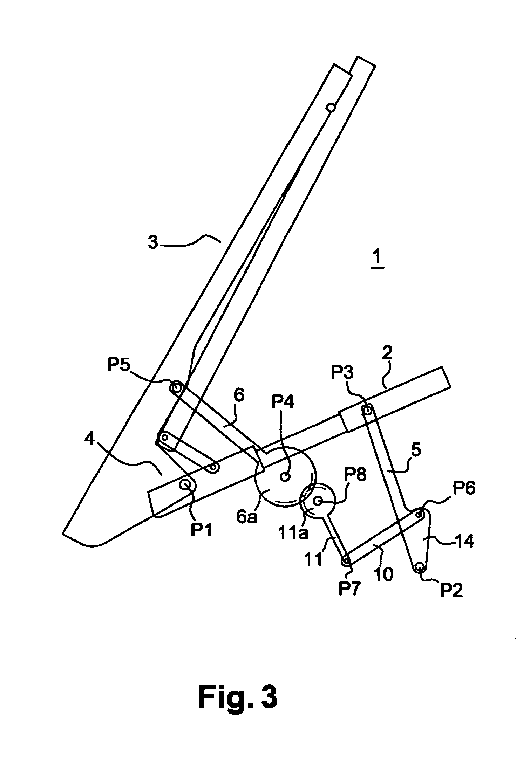

Les figures 2 et 3 permettent d'apprécier la manière avec laquelle l'escamotage du siège selon l'invention est réalisé.

Après désactivation des moyens de verrouillage du siège dans sa position déployée, un utilisateur exerce une unique poussée au niveau du sommet du dossier en vue de placer le siège dans sa configuration escamotée.

Cela se traduit par un pivotement du dossier 3 par rapport à l'assise 2 autour de la liaison pivot P1.

Simultanément, les deux bielles arrière 6 se mettent également en rotation puisqu'elles sont liées au dossier 3. La rotation des bielles arrière 6 entraîne une mise en rotation de chaque la biellette menante 11 puisque ces deux éléments sont engrenés l'un dans l'autre par, respectivement, leurs roues dentées 6a et 11a.

Le pivotement de la biellette arrière 6 autour de la liaison pivot P8 entraine une traction de la biellette menée 10. La biellette menée 10 est liée au pied avant 5. Le pied avant 5 entre lui-même en rotation par rapport à la liaison pivot P2.

En d'autres termes, l'action d'un utilisateur sur le sommet du dossier 3 en vue de le rabattre en direction de l'assise 2 se traduit par une action sur le pied avant 5, grâce aux moyens d'interconnexion constitués par les biellettes menante 11 et menée 10 ; ceci fait que la rotation du pied avant 5 est pilotée en direction de l'arrière du siège.

On voit donc qu'une action unique de l'utilisateur se traduit bien entendu par un pivotement du dossier 3 en direction de l'assise mais également du fait de la présence de moyens d'interconnexion, ce mouvement unique imprimé par l'utilisateur sur le dossier 3 se traduit par un pilotage de l'escamotage de l'assise. En effet, le pied avant 5 est tracté vers l'arrière jusqu'à venir se placer dans une position horizontale, ce qui a pour effet d'abaisser l'assise 2 jusqu'à ce qu'elle vienne se placer au fond de la cuvette, le dossier venant se rabattre sur l'assise en position de portefeuille.

Un des points tout à fait remarquable du siège selon l'invention tient au fait que l'escamotage du siège se fait de manière entièrement pilotée ; en d'autres termes aucun des éléments mobiles qui participent à l'escamotage de siège n'est cinématiquement indépendant.

Le siège selon l'invention présente donc une structure qui permet un escamotage par un unique mouvement et qui évite tout blocage au cours de l'escamotage.

Le siège permet notamment d'éviter une désynchronisation des mouvements du dossier et de l'assise qui peut conduire à un blocage. Le mouvement d'escamotage du siège selon l'invention est donc particulièrement fluide pour l'utilisateur.

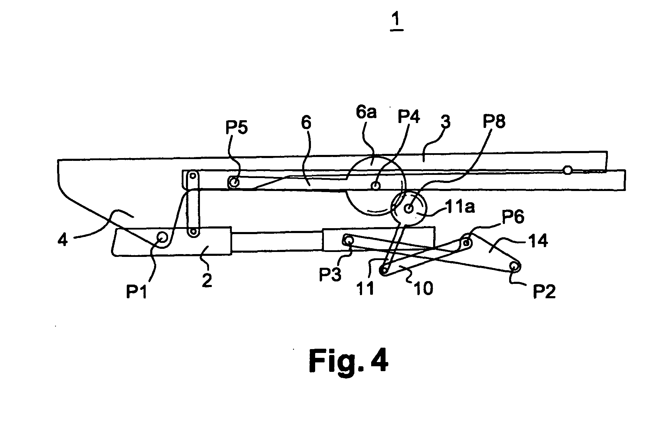

On voit, par ailleurs, sur la figure 4 que l'on peut obtenir, en position escamotée, un siège extrêmement compact.

La présence de moyens d'interconnexion entre les bielles arrière 6 et le pied avant 5 par roues dentées 6a et 11a et bielles menantes et menées 11 et 10 n'est donc aucunement préjudiciable à la compacité du siège lorsqu'il est en position escamotée.

La compacité du siège est particulièrement visible à la figure 4 ; cette figure montre notamment que les moyens d'interconnexion restent contenus dans l'épaisseur du siège ; dans la configuration escamotée, l'épaisseur du siège est formée par l'assise 2 qui est abaissée sur laquelle se superpose le dossier 3. Les moyens d'interconnexion dont les biellettes menée 10 et arrière 11 se replient l'une vers l'autre, ont un impact neutre en termes d'encombrement.

On note que l'excroissance 14 du pied avant 5 participe à la compacité du siège dans sa position escamotée. A longueur égale de biellette menée 10, l'excroissance 14 permet de fixer sur le pied avant 5 la liaison P6 à une position plus proche de l'extrémité basse du pied avant 5. En position escamotée, la biellette menante 11 est dans une position proche de l'horizontale ; ainsi, les moyens d'interconnexion ne forment pas de saillie néfaste pour la compacité générale du siège lorsqu'il est dans sa position escamotée.

Le fait que le point d'attache de la liaison pivot P4 soit dans la direction verticale plus élevée que le point d'attache de la liaison pivot P2 s'avère une disposition favorable en termes de compacité puisque le pied avant 5 peut se replier de manière sensiblement horizontale tandis que les bielles arrière 6 peuvent également se replier de manière horizontale dans un plan parallèle à celui du pied avant 5. Il n'y ainsi pas de conflit entre les bielles arrière 6 et le pied avant 5.

Compte tenu de grande compacité et de son fonctionnement fluide, le siège selon l'invention peut être mis en place de façon préférée au niveau de siège de rang 3.

Bien entendu, l'invention n'est pas limitée aux formes de réalisation décrites ci-dessus à titre d'exemples limitatifs mais elle en embrasse au contraire toutes les formes de réalisation si comprises dans le cadre de l'invention tel que défini par les revendications. Ainsi, le siège peut être équipé de moyens d'assistance à l'escamotage ou au déploiement qui peuvent prendre la forme, par exemple, de ressorts placés au niveau d'une ou de plusieurs liaisons pivot.

## Revendications

1. Siège escamotable (1) notamment pour véhicule automobile comprenant
- une assise (2) sur laquelle est articulé un dossier (3) par une liaison pivot (P1),
- des moyens de liaison avant reliant de manière pivotante l'assise (2) à la structure du véhicule,
- des moyens de liaison arrière reliant de manière pivotante le dossier (3) à la structure du véhicule,
le siège pouvant occuper une position déployée dans laquelle l'assise est sensiblement horizontale et est soutenue par les moyens de liaison avant et dans laquelle le dossier est sensiblement vertical et est soutenu par les moyens de liaison arrière ou pouvant occuper une position escamotée dans laquelle le dossier est rabattu contre l'assise et les moyens de liaison avant et arrière sont repliés sensiblement à l'horizontale,
**caractérisé en ce que** le siège comprend des moyens d'interconnexion (10, 11) des moyens de liaison arrière et des moyens de liaison avant conçus pour transmettre un pivotement des moyens de liaison arrière en un pivotement de même sens des moyens de liaison avant.

2. Siège escamotable selon la revendication 1, **caractérisé en ce que** les moyens d'interconnexion présentent au moins une biellette menante (11) articulée par rapport à la structure du véhicule par une liaison pivot (P4) entraînée en rotation par les moyens de liaison arrière et au moins une biellette menée (10) articulée sur ladite biellette menante (11) et sur les moyens de liaison avant.

3. Siège escamotable selon la revendication 2, **caractérisé en ce que** les moyens de liaison avant comprennent un pied avant (5) sur lequel est ménagée au moins une liaison pivot (P6) sur laquelle se fixe la biellette menée (10).

4. Siège selon la revendication 3, **caractérisé en ce que** le pied avant (5) présente au moins une excroissance (14) sur laquelle est positionnée la liaison pivot (P6).

5. Siège selon l'une des revendications 2 à 4, **caractérisé en ce que** les moyens de liaison arrière comprennent au moins une bielle arrière (6) dont une extrémité est articulée sur le dossier (3) par une liaison (P5) et dont la seconde extrémité est articulée sur la structure du véhicule par une liaison pivot (P4).

6. Siège selon la revendication 5, **caractérisé en ce que** la bielle arrière (6) présente une roue dentée (6a) centrée sur la liaison pivot (P6) et **en ce que** la biellette menante (11) présente une roue dentée (11a) qui s'engrène dans la roue dentée (6a) de la bielle arrière (6).

7. Siège selon l'une des revendications 5 à 6, **caractérisé en ce qu'**il présente deux bielles arrière (6) disposées de part et d'autre du dossier (3).

8. Siège selon l'une des revendications 5 à 7, **caractérisé en ce que** chaque liaison pivot (P5) qui assure l'articulation du dossier (3) sur la bielle arrière (6) est positionnée sensiblement au niveau du tiers inférieur du dossier.

9. Siège selon l'une des revendications 5 à 8, **caractérisé en ce que** la liaison pivot (P4) assurant l'articulation de chaque bielle arrière (6) sur la structure du véhicule est située à une cote plus élevée dans une direction verticale Y du véhicule que la liaison pivot (P2) assurant l'articulation du pied avant (5) sur la structure du véhicule.

## Claims

1. A retractable seat (1), in particular for an automotive vehicle, comprising
- a seat portion (2) on which a backrest (3) is hinged by a pivot link (P1),
- front connecting means pivotably connecting the seat portion (2) to the structure of the vehicle,
- rear connecting means pivotably connecting the backrest (3) to the structure of the vehicle,
the seat being able to occupy a deployed position, in which the seat portion is substantially horizontal and is supported by the front connecting means and in which the backrest is substantially vertical and is supported by the rear connecting means, or a retracted position, in which the backrest is folded down against the seat portion and the front and rear connecting means are folded substantially horizontally,
**characterized in that** the seat comprises interconnecting means (10, 11) for the rear connecting means and the front connecting means designed to transmit pivoting of the rear connecting means as pivoting in the same direction of the front connecting means.

2. The retractable seat according to claim 1, **characterized in that** the interconnecting means have at least one driving connecting rod (11) hinged relative to the structure of the vehicle by a pivot link (P4) rotated by the rear connecting means and at least one driven connecting rod (10) hinged on said driving connecting rod (11) and on the front connecting means.

3. The retractable seat according to claim 2, **characterized in that** the front connecting means comprise a front foot (5) on which at least one pivot link (P6) is formed on which the driven connecting rod (10) is attached.

4. The seat according to claim 3, **characterized in that** the front foot (5) has at least one protuberance (14) on which the pivot link (P6) is positioned.

5. The seat according to one of claims 2 to 4, **characterized in that** the rear connecting means comprise at least one rear connecting rod (6) whereof one end is hinged on the backrest (3) by a link (P5) and whereof the second end is hinged on the structure of the vehicle by a pivot link (P4).

6. The seat according to claim 5, **characterized in that** the rear connecting rod (6) has a toothed wheel (6a) centered on the pivot link (P6) and **in that** the driving connecting rod (11) has a toothed wheel (11a) that meshes in the toothed wheel (6a) of the rear connecting rod (6).

7. The seat according to one of claims 5 and 6, **characterized in that** it has two rear connecting rods (6) positioned on either side of the backrest (3).

8. The seat according to one of claims 5 to 7, **characterized in that** each pivot link (P5) that hinges the backrest (3) on the rear connecting rod (6) is positioned substantially at the lower third of the backrest.

9. The seat according to one of claims 5 to 8, **characterized in that** the pivot link (P4) hinging each rear connecting rod (6) on the structure of the vehicle is situated at a higher point in a vertical direction Y of the vehicle than the pivot link (P2) hinging the front foot (5) on the structure of the vehicle.

## Patentansprüche

1. Verstaubarer Sitz (1), insbesondere für ein Kraftfahrzeug, umfassend
- eine Sitzfläche (2), auf der eine Rückenlehne (3) durch ein Drehgelenk (P1) gelenkig verbunden ist,
- Mittel zur vorderen Verbindung, die die Sitzfläche (2) drehbar auf die Struktur des Fahrzeugs verbinden,
- Mittel zur hinteren Verbindung, die die Rückenlehne (3) drehbar auf der Struktur des Fahrzeugs verbinden,
wobei der Sitz eine ausgezogene Position einnehmen kann, in der die Sitzfläche im Wesentlichen waagrecht ist und von den Mitteln zur vorderen Verbindung getragen wird und in der die Rückenlehne im Wesentlichen Senkrecht ist und von den Mitteln zur hinteren Verbindung getragen wird, oder eine verstaute Position einnimmt, in der die Rückenlehne gegen die Sitzfläche umgelegt ist und die Mittel zur vorderen und zur hintern Verbindung im wesentlichen waagrecht ungeklappt sind.
**dadurch gekennzeichnet, dass** der Sitz Mittel zum Zusammenschluss (10, 11) der Mittel zur hinteren Verbindung und der Mittel zur vorderen Verbindung umfasst, die entworfen sind, um eine Drehung der Mittel zur hinteren Verbindung in eine Drehung in der gleichen Richtung der Mittel zur vorderen Verbindung zu übertragen.

2. Verstaubarer Sitz nach Anspruch 1, **dadurch gekennzeichnet, dass** die Mittel zum Zusammenschluß mindestens eine antreibende Druckstange (11) aufweisen, die mit Bezug auf die Struktur des Fahrzeugs durch eine Drehverbindung (P4) gelenkig verbunden ist, die durch die Mittel zur hinteren Verbindung angetrieben wird, und mindestens eine angetriebene Druckstange (10), die auf der antreibenden Druckstange (11) und auf den Mitteln zur vorderen Verbindung gelenkig verbunden ist.

3. Verstaubarer Sitz nach Anspruch 2, **dadurch gekennzeichnet, dass** die Mittel zur vorderen Verbindung einen vorderen Fuß (5) umfassen, auf dem mindestens eine Drehverbindung (P6) angeordnet ist, auf der die angetriebene Druckstange (10) befestigt wird.

4. Sitz nach Anspruch 3, **dadurch gekennzeichnet, dass** der vordere Fuß (5) mindestens einen Vorsprung (14) aufweist, auf dem die Drehverbindung (P6) angeordnet ist.

5. Sitz nach einem der Ansprüche 2 bis 4, **dadurch gekennzeichnet, dass** die Mittel zur hinteren Verbindung mindestens eine hintere Pleuelstange (6), von der ein Ende auf der Rückenlehne (3) durch eine Verbindung (P5) gelenkig verbunden ist, und von der das zweite Ende auf der Struktur des Fahrzeugs durch eine Drehverbindung (P4) gelenkig verbunden ist.

6. Sitz nach Anspruch 5, **dadurch gekennzeichnet, dass** die hintere Pleuelstange (6) ein Zahnrad (6a) aufweist, dass auf der Drehverbindung (P6) zentriert ist, und **dadurch**, dass die antreibende Druckstange (11) ein Zahnrad (11 a) aufweist, das in das Zahnrad (6a) der hinteren Pleuelstange (6) eingreift.

7. Sitz nach einem der Ansprüche 5 bis 6, **dadurch gekennzeichnet, dass** er zwei hintere Pleuelstangen (6) aufweist, die auf beiden Seiten der Rückenlehne (3) angeordnet sind.

8. Sitz nach einem der Ansprüche 5 bis 7, **dadurch gekennzeichnet, dass** jede Drehverbindung (P5), die die drehbare Verbindung der Rückenlehne (3) auf der hinteren Pleuelstange (6) sicherstellt, im Wesentlichen auf der Ebene des unteren Drittels der Rückenlehne angeordnet ist.

9. Sitz nach einem der Ansprüche 5 bis 8, **dadurch gekennzeichnet, dass** die Drehverbindung (P4), die die drehbare Verbindung jeder hinteren Pleuelstange (6) auf der Struktur des Fahrzeugs sicherstellt, auf einer höheren Seite in einer senkrechten Richtung Y des Fahrzeugs als die Drehverbindung (P2) angeordnet ist, die die drehbare Verbindung des vorderen Fußes (5) auf der Struktur des Fahrzeugs sicherstellt.
